# EUROPEAN PATENT SPECIFICATION

(11) **EP 2 183 287 B1**
(45) Date of publication and mention of the grant of the patent: **24.02.2016**
(21) Application number: 08798671.7
(22) Date of filing: 26.08.2008
(51) Int. Cl.: B01J 31/00, C08F 4/6592, C08F 110/06, C08F 10/06

(54) **TRANSITION METAL CATALYSTS AND FORMATION THEREOF**
ÜBERGANGSMETALLKATALYSATOREN UND HERSTELLUNGSVERFAHREN DAFÜR
CATALYSEURS À BASE DE MÉTAUX DE TRANSITION ET PROCÉDÉ DE FORMATION DE CEUX-CI

(30) Priority: 30.08.2007 US 897361
(43) Date of publication of application: 12.05.2010
(73) Proprietor: Fina Technology, Inc., Houston, TX 77267-4412 (US)
(72) Inventor: THORMAN, Joseph, L., Houston, TX 77025 (US); HENRY, Shady, N., Seabrook, TX 77586 (US)
(74) Representative: Raboin, Jean-Christophe
(86) International application number: PCT/US2008/074279
(87) International publication number: WO 2009/032613

(56) References cited:
- EP-A1- 1 300 240
- EP-A1- 2 072 545
- WO-A1-2006/060544
- US-A- 3 673 281
- US-A- 5 183 867
- US-A- 5 895 771
- US-A- 6 069 213
- US-A1- 2004 204 310
- US-A1- 2007 055 028

## Description

### FIELD

Embodiments of the present invention generally relate to transition metal catalyst systems.

### BACKGROUND

While transition metal catalyst compounds, primarily metallocene catalysts, are capable of forming polyolefins having desirable properties, such catalysts have generally not been utilized heavily due to lower productivity and higher costs than traditional Ziegler-Natta catalysts. WO2006/060544 discloses the preparation of methylalumoxane treated silica and the preparation of a supported metallocene catalyst comprising said methylalumoxane treated silica. The supported metallocene catalyst is prepared by contacting a metallocene compound treated with TiBAl with the methylalumoxane treated silica. EP1300240 discloses the preparation of a supported and ionised metallocene catalyst prepared by reacting silica with MAO, and subsequently by reacting the support SiO₂. EP2072545 discloses the preparation of a supported catalyst system comprising contacting a first solution comprising a metallocene catalyst and TiBAl, with a second solution comprising MAO supported on silica.

Therefore, it is desired to form a transition metal catalyst capable of experiencing increased productivity, while retaining the desirable polymer properties often achieved with such catalysts.

### SUMMARY

Embodiments of the present invention include supported catalyst systems and method of forming the same. The method generally includes providing a support material, providing a single site transition metal catalyst compound, contacting the transition metal catalyst compound with triisobutyl aluminum (TiBAl) to form a modified catalyst compound and contacting the support material with the modified catalyst compound to form a supported catalyst system. In particular, the present invention relates to a method of forming a catalyst system comprising providing a support material and contacting the support material with an activator to form an activated support, and wherein the activated support comprises an activator to support material weight ratio of from 0.7:1 to 0.9:1; providing a transition metal catalyst compound; contacting the transition metal catalyst compound with triisobutyl aluminium (TiBAl) to form a modified catalyst compound, wherein the contact with TiBAl consists essentially of contacting the transition metal catalyst compound with TiBAl prior to contacting the support material with the modified catalyst compound; and contacting the support material with the modified catalyst compound to form a supported catalyst system.

### DETAILED DESCRIPTION

### Introduction and Definitions

A detailed description will now be provided. Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions when the information in this patent is combined with available information and technology.

Various terms as used herein are shown below. To the extent a term used in a claim is not defined below, it should be given the broadest definition persons in the pertinent art have given that term as reflected in printed publications and issued patents. Further, unless otherwise specified, all compounds described herein may be substituted or unsubstituted and the listing of compounds includes derivatives thereof.

### Catalyst Systems

Catalyst systems useful for polymerizing olefin monomers include any catalyst system known to one skilled in the art. For example, the catalyst system may include single site catalyst systems, which may include transition metal catalysts and/or metallocene catalyst systems, Ziegler-Natta catalyst systems or combinations thereof, for example. A brief discussion of such catalyst systems is included below, but is in no way intended to limit the scope of the invention to such catalysts.

Metallocene catalysts may be characterized generally as coordination compounds incorporating one or more cyclopentadienyl (Cp) groups (which may be substituted or unsubstituted, each substitution being the same or different) coordinated with a transition metal.

The substituent groups on Cp may be linear, branched or cyclic hydrocarbyl radicals, for example. The inclusion of cyclic hydrocarbyl radicals may transform the Cp into other contiguous ring structures, such as indenyl, azulenyl and fluorenyl groups, for example. These contiguous ring structures may also be substituted or unsubstituted by hydrocarbyl radicals, such as C₁ to C₂₀ hydrocarbyl radicals, for example.

A specific, non-limiting, example of a metallocene catalyst is a bulky ligand metallocene compound generally represented by the formula:

[L]ₘM[A]ₙ;

wherein L is a bulky ligand, A is a leaving group, M is a transition metal and m and n are such that the total ligand valency corresponds to the transition metal valency. For example m may be from 1 to 4 and n may be from 0 to 3.

The metal atom "M" of the metallocene catalyst compound, as described throughout the specification and claims, may be selected from Groups 3 through 12 atoms and lanthanide Group atoms, or from Groups 3 through 10 atoms or from Sc, Ti, Zr, Hf, V, Nb, Ta, Mn, Re, Fe, Ru, Os, Co, Rh, Ir and Ni. The oxidation state of the metal atom "M" may range from 0 to +7 or is +1, +2, +3, +4 or +5, for example.

The bulky ligand generally includes a cyclopentadienyl group (Cp) or a derivative thereof. The Cp ligand(s) form at least one chemical bond with the metal atom M to form the "metallocene catalyst." The Cp ligands are distinct from the leaving groups bound to the catalyst compound in that they are not as highly susceptible to substitution/abstraction reactions as the leaving groups.

Cp ligands may include ring(s) or ring system(s) including atoms selected from group 13 to 16 atoms, such as carbon, nitrogen, oxygen, silicon, sulfur, phosphorous, germanium, boron, aluminum and combinations thereof, wherein carbon makes up at least 50% of the ring members. Non-limiting examples of the ring or ring systems include cyclopentadienyl, cyclopentaphenanthreneyl, indenyl, benzindenyl, fluorenyl, tetrahydroindenyl, octahydrofluorenyl, cyclooctatetraenyl, cyclopentacyclododecene, 3,4-benzofluorenyl, 9-phenylfluorenyl, 8-H-cyclopent[a]acenaphthylenyl, 7-H-dibenzofluorenyl, indeno[1,2-9]anthrene, thiophenoindenyl, thiophenofluorenyl, hydrogenated versions thereof (*e.g*., 4,5,6,7-tetrahydroindenyl or "H₄Ind"), substituted versions thereof and heterocyclic versions thereof, for example.

Cp substituent groups may include hydrogen radicals, alkyls (*e.g.,* methyl, ethyl, propyl, butyl, pentyl, hexyl, fluoromethyl, fluoroethyl, difluoroethyl, iodopropyl, bromohexyl, benzyl, phenyl, methylphenyl, tert-butylphenyl, chlorobenzyl, dimethylphosphine and methylphenylphosphine), alkenyls (*e.g*., 3-butenyl, 2-propenyl and 5-hexenyl), alkynyls, cycloalkyls (*e.g.,* cyclopentyl and cyclohexyl), aryls, alkoxys (*e.g.,* methoxy, ethoxy, propoxy and phenoxy), aryloxys, alkylthiols, dialkylamines (*e.g*., dimethylamine and diphenylamine), alkylamidos, alkoxycarbonyls, aryloxycarbonyls, carbamoyls, alkyl- and dialkyl-carbamoyls, acyloxys, acylaminos, aroylaminos, organometalloid radicals (*e.g.,* dimethylboron), Group 15 and Group 16 radicals (*e.g.,* methylsulfide and ethylsulfide) and combinations thereof, for example. In one embodiment, at least two substituent groups, two adjacent substituent groups in one embodiment, are joined to form a ring structure.

Each leaving group "A" is independently selected and may include any ionic leaving group, such as halogens (*e.g.,* chloride and fluoride), hydrides, C₁ to C₁₂ alkyls *(e.g.,* methyl, ethyl, propyl, phenyl, cyclobutyl, cyclohexyl, heptyl, tolyl, trifluoromethyl, methylphenyl, dimethylphenyl and trimethylphenyl), C₂ to C₁₂ alkenyls (*e.g.,* C₂ to C₆ fluoroalkenyls), C₆ to C₁₂ aryls (*e.g.,* C₇ to C₂₀ alkylaryls), C₁ to C₁₂ alkoxys *(e.g.,* phenoxy, methyoxy, ethyoxy, propoxy and benzoxy), C₆ to C₁₆ aryloxys, C₇ to C₁₈ alkylaryloxys and C₁ to C₁₂ heteroatom-containing hydrocarbons and substituted derivatives thereof, for example.

Other non-limiting examples of leaving groups include amines, phosphines, ethers, carboxylates (*e.g.,* C₁ to C₆ alkylcarboxylates, C₆ to C₁₂ arylcarboxylates and C₇ to C₁₈ alkylarylcarboxylates), dienes, alkenes, hydrocarbon radicals having from 1 to 20 carbon atoms (*e.g*., pentafluorophenyl) and combinations thereof, for example. In one embodiment, two or more leaving groups form a part of a fused ring or ring system.

In a specific embodiment, L and A may be bridged to one another to form a bridged metallocene catalyst. A bridged metallocene catalyst, for example, may be described by the general formula:

XCp^{A}Cp^{B}MAₙ;

wherein X is a structural bridge, Cp^{A} and Cp^{B} each denote a cyclopentadienyl group or derivatives thereof, each being the same or different and which may be either substituted or unsubstituted, M is a transition metal and A is an alkyl, hydrocarbyl or halogen group and n is an integer between 0 and 4, and either 1 or 2 in a particular embodiment.

Non-limiting examples of bridging groups "X" include divalent hydrocarbon groups containing at least one Group 13 to 16 atom, such as, but not limited to, at least one of a carbon, oxygen, nitrogen, silicon, aluminum, boron, germanium, tin and combinations thereof; wherein the heteroatom may also be a C₁ to C₁₂ alkyl or aryl group substituted to satisfy a neutral valency. The bridging group may also contain substituent groups as defined above including halogen radicals and iron. More particular non-limiting examples of bridging group are represented by C₁ to C₆ alkylenes, substituted C₁ to C₆ alkylenes, oxygen, sulfur, R₂C=, R₂Si=, --Si(R)₂Si(R₂)--, R₂Ge= or RP= (wherein "=" represents two chemical bonds), where R is independently selected from hydrides, hydrocarbyls, halocarbyls, hydrocarbyl-substituted organometalloids, halocarbyl-substituted organometalloids, disubstituted boron atoms, disubstituted Group 15 atoms, substituted Group 16 atoms and halogen radicals, for example. In one embodiment, the bridged metallocene catalyst component has two or more bridging groups.

Other non-limiting examples of bridging groups include methylene, ethylene, ethylidene, propylidene, isopropylidene, diphenylmethylene, 1,2-dimethylethylene, 1,2-diphenylethylene, 1,1,2,2-tetramethylethylene, dimethylsilyl, diethylsilyl, methyl-ethylsilyl, trifluoromethylbutylsilyl, bis(trifluoromethyl)silyl, di(n-butyl)silyl, di(n-propyl)silyl, di(i-propyl)silyl, di(n-hexyl)silyl, dicyclohexylsilyl, diphenylsilyl, cyclohexylphenylsilyl, t-butylcyclohexylsilyl, di(t-butylphenyl)silyl, di(p-tolyl)silyl and the corresponding moieties, wherein the Si atom is replaced by a Ge or a C atom; dimethylsilyl, diethylsilyl, dimethylgermyl and/or diethylgermyl.

In another embodiment, the bridging group may also be cyclic and include 4 to 10 ring members or 5 to 7 ring members, for example. The ring members may be selected from the elements mentioned above and/or from one or more of boron, carbon, silicon, germanium, nitrogen and oxygen, for example. Non-limiting examples of ring structures which may be present as or part of the bridging moiety are cyclobutylidene, cyclopentylidene, cyclohexylidene, cycloheptylidene, cyclooctylidene, for example. The cyclic bridging groups may be saturated or unsaturated and/or carry one or more substituents and/or be fused to one or more other ring structures. The one or more Cp groups which the above cyclic bridging moieties may optionally be fused to may be saturated or unsaturated. Moreover, these ring structures may themselves be fused, such as, for example, in the case of a naphthyl group.

In one embodiment, the metallocene catalyst includes CpFlu Type catalysts (*e.g*., a metallocene catalyst wherein the ligand includes a Cp fluorenyl ligand structure) represented by the following formula:

X(CpR¹ₙR²ₘ)(FlR³ₚ);

wherein Cp is a cyclopentadienyl group or derivatives thereof, Fl is a fluorenyl group, X is a structural bridge between Cp and Fl, R¹ is an optional substituent on the Cp, n is 1 or 2, R² is an optional substituent on the Cp bound to a carbon immediately adjacent to the ipso carbon, m is 1 or 2 and each R³ is optional, may be the same or different and may be selected from C₁ to C₂₀ hydrocarbyls. In one embodiment, p is selected from 2 or 4. In one embodiment, at least one R³ is substituted in either the 2 or 7 position on the fluorenyl group and at least one other R³ being substituted at an opposed 2 or 7 position on the fluorenyl group.

In yet another aspect, the metallocene catalyst includes bridged mono-ligand metallocene compounds (*e.g*., mono cyclopentadienyl catalyst components). In this embodiment, the metallocene catalyst is a bridged "half-sandwich" metallocene catalyst. In yet another aspect of the invention, the at least one metallocene catalyst component is an unbridged "half sandwich" metallocene. (*See,* U.S. Pat. No. 6,069,213, U.S. Pat. No. 5,026,798, U.S. Pat. No. 5,703,187, U.S. Pat. No. 5,747,406, U.S. Pat. No. 5,026,798 and U.S. Pat. No. 6,069,213, which are incorporated by reference herein.)

Non-limiting examples of metallocene catalyst components consistent with the description herein include, for example cyclopentadienylzirconiumAₙ; indenylzirconiumAₙ; (1-methylindenyl)zirconiumAₙ; (2-methylindenyl)zirconiumAₙ, (1-propylindenyl)zirconiumAₙ; (2-propylindenyl)zirconiumAₙ; (1-butylindenyl)zirconiumAₙ; (2-butylindenyl)zirconiumAₙ; methylcyclopentadienylzirconiumAₙ; tetrahydroindenylzirconiumAₙ; pentamethylcyclopentadienylzirconiumAₙ; cyclopentadienylzirconiumAₙ; pentamethylcyclopentadienyltitaniumAₙ; tetramethylcyclopentyltitaniumAₙ; (1,2,4-trimethylcyclopentadienyl)zirconiumAₙ; dimethylsilyl(1,2,3,4-tetramethylcyclopentadienyl)(cyclopentadienyl)zirconiumAn; dimethylsilyl(1,2,3,4-tetramethylcyclopentadienyl)(1,2,3-trimethylcyclopentadienyl)zirconiumAₙ; dimethylsilyl(1,2,3,4-tetramethylcyclopentadienyl)(1,2-dimethylcyclopentadienyl)zirconiumAₙ; dimethylsilyl(1,2,3,4-tetramethylcyclopentadienyl)(2-methylcyclopentadienyl)zirconiumAₙ; dimethylsilylcyclopentadienylindenylzirconiumAₙ; dimethylsilyl(2-methylindenyl)(fluorenyl)zirconiumAₙ; diphenylsilyl(1,2,3,4-tetramethylcyclopentadienyl)(3-propylcyclopentadienyl)zirconiumAₙ; dimethylsilyl (1,2,3,4-tetramethylcyclopentadienyl) (3-t-butylcyclopentadienyl)zirconiumAₙ; dimethylgermyl(1,2-dimethylcyclopentadienyl)(3-isopropylcyclopentadienyl)zirconiumAₙ; dimethylsilyl(1,2,3,4-tetramethylcyclopentadienyl)(3-methylcyclopentadienyl)zirconiumAₙ; diphenylmethylidene(cyclopentadienyl)(9-fluorenyl)zirconiumAₙ; diphenylmethylidenecyclopentadienylindenylzirconiumAₙ; isopropylidenebiscyclopentadienylzirconiumAₙ; isopropylidene(cyclopentadienyl)(9-fluorenyl)zirconiumAₙ; isopropylidene(3-methylcyclopentadienyl)(9-fluorenyl)zirconiumAₙ; ethylenebis(9-fluorenyl)zirconiumAₙ; ethylenebis(1-indenyl)zirconiumAₙ; ethylenebis(1-indenyl)zirconiumAₙ; ethylenebis(2-methyl-1-indenyl)zirconiumAₙ; ethylenebis(2-methyl-4,5,6,7-tetrahydro-1-indenyl)zirconiumAₙ; ethylenebis(2-propyl-4,5,6,7-tetrahydro-1-indenyl)zirconiumAₙ; ethylenebis(2-isopropyl-4,5,6,7-tetrahydro-1-indenyl)zirconiumAₙ; ethylenebis(2-butyl-4,5,6,7-tetrahydro-1-indenyl)zirconiumAₙ; ethylenebis(2-isobutyl-4,5,6,7-tetrahydro-1-indenyl)zirconiumAₙ; dimethylsilyl(4,5,6,7-tetrahydro-1-indenyl)zirconiumAₙ; diphenyl(4,5,6,7-tetrahydro-1-indenyl)zirconiumAₙ; ethylenebis(4,5,6,7-tetrahydro-1-indenyl)zirconiumAₙ; dimethylsilylbis(cyclopentadienyl)zirconiumAₙ; dimethylsilylbis(9-fluorenyl)zirconiumAₙ; dimethylsilylbis(1-indenyl)zirconiumAₙ; dimethylsilylbis(2-methylindenyl)zirconiumAₙ; dimethylsilylbis(2-propylindenyl)zirconiumAₙ; dimethylsilylbis(2-butylindenyl)zirconiumAₙ; diphenylsilylbis(2-methylindenyl)zirconiumAₙ; diphenylsilylbis(2-propylindenyl)zirconiumAₙ; diphenylsilylbis(2-butylindenyl)zirconiumAₙ; dimethylgermylbis(2-methylindenyl)zirconiumAₙ; dimethylsilylbistetrahydroindenylzirconiumAₙ; dimethylsilylbistetramethylcyclopentadienylzirconiumAₙ; dimethylsilyl(cyclopentadienyl)(9-fluorenyl)zirconiumAₙ; diphenylsilyl(cyclopentadienyl)(9-fluorenyl)zirconiumAₙ; diphenylsilylbisindenylzirconiumAₙ; cyclotrimethylenesilyltetramethylcyclopentadienylcyclopentadienylzirconiumAₙ; cyclotetramethylenesilyltetramethylcyclopentadienylcyclopentadienylzirconiumAₙ; cyclotrimethylenesilyl(tetramethylcyclopentadienyl)(2-methylindenyl)zirconiumAₙ; cyclotrimethylenesilyl(tetramethylcyclopentadienyl)(3-methylcyclopentadienyl)zirconiumAₙ; cyclotrimethylenesilylbis(2-methylindenyl)zirconiumAₙ; cyclotrimethylenesilyl(tetramethylcyclopentadienyl)(2,3,5-trimethylclopentadienyl)zirconiumAₙ; cyclotrimethylenesilylbis(tetramethylcyclopentadienyl)zirconiumAₙ; dimethylsilyl(tetramethylcyclopentadieneyl)(N-tertbutylamido)titaniumAₙ; biscyclopentadienylchromiumAₙ; biscyclopentadienylzirconiumAₙ; bis(n-butylcyclopentadienyl)zirconiumAₙ; bis(n-dodecyclcyclopentadienyl)zirconiumAₙ; bisethylcyclopentadienylzirconiumAₙ; bisisobutylcyclopentadienylzirconiumAₙ; bisisopropylcyclopentadienylzirconiumAₙ; bismethylcyclopentadienylzirconiumAₙ; bisoctylcyclopentadienylzirconiumAₙ; bis(n-pentylcyclopentadienyl)zirconiumAₙ; bis(n-propylcyclopentadienyl)zirconiumAₙ; bistrimethylsilylcyclopentadienylzirconiumAₙ; bis(1,3-bis(trimethylsilyl)cyclopentadienyl)zirconiumAₙ; bis(1-ethyl-2-methylcyclopentadienyl)zirconiumAₙ; bis(1-ethyl-3-methylcyclopentadienyl)zirconiumAₙ; bispentamethylcyclopentadienylzirconiumAₙ; bispentamethylcyclopentadienylzirconiumAₙ; bis(1-propyl-3-methylcyclopentadienyl)zirconiumAₙ; bis(1-n-butyl-3-methylcyclopentadienyl)zirconiumAₙ; bis(1-isobutyl-3-methylcyclopentadienyl)zirconiumAₙ; bis(1-propyl-3-butylcyclopentadienyl)zirconiumAₙ; bis(1,3-n-butylcyclopentadienyl)zirconiumAₙ; bis(4,7-dimethylindenyl)zirconiumAₙ; bisindenylzirconiumAₙ; bis(2-methylindenyl)zirconiumAₙ; cyclopentadienylindenylzirconiumAₙ; bis(n-propylcyclopentadienyl)hafniumAₙ; bis(n-butylcyclopentadienyl)hafniumAₙ; bis(n-pentylcyclopentadienyl)hafniumAₙ; (n-propylcyclopentadienyl)(n-butylcyclopentadienyl)hafniumAₙ; bis[(2-trimethylsilylethyl)cyclopentadienyl]hafniumAₙ; bis(trimethylsilylcyclopentadienyl)hafniumAₙ; bis(2-n-propylindenyl)hafniumAₙ; bis(2-n-butylindenyl)hafniumAₙ; dimethylsilylbis(n-propylcyclopentadienyl)hafniumAₙ; dimethylsilylbis(n-butylcyclopentadienyl)hafniumAₙ; bis(9-n-propylfluorenyl)hafniumAₙ; bis(9-n-butylfluorenyl)hafniumAₙ; (9-n-propylfluorenyl)(2-n-propylindenyl)hafniumAₙ; bis(1-n-propyl-2-methylcyclopentadienyl)hafniumAₙ; (n-propylcyclopentadienyl)(1-n-propyl-3-n-butylcyclopentadienyl)hafniumAₙ; dimethylsilyltetramethylcyclopentadienylcyclopropylamidotitaniumAₙ; dimethylsilyltetramethyleyclopentadienylcyclobutylamidotitaniumAₙ; dimethylsilyltetramethyleyclopentadienylcyclopentylamidotitaniumAₙ; dimethylsilyltetramethylcyclopentadienylcyclohexylamidotitaniumAₙ; dimethylsilyltetramethylcyclopentadienylcycloheptylamidotitaniumAₙ; dimethylsilyltetramethylcyclopentadienylcyclooctylamidotitaniumAₙ; dimethylsilyltetramethylcyclopentadienylcyclononylamidotitaniumAₙ; dimethylsilyltetramethylcyclopentadienylcyclodecylamidotitaniumAₙ; dimethylsilyltetramethylcyclopentadienylcycloundecylamidotitaniumAₙ; dimethylsilyltetramethylcyclopentadienylcyclododecylamidotitaniumAₙ; dimethylsilyltetramethylcyclopentadienyl(sec-butylamido)titaniumAₙ; dimethylsilyl(tetramethylcyclopentadienyl)(n-octylamido)titaniumAₙ; dimethylsilyl(tetramethylcyclopentadienyl)(n-decylamido)titaniumAₙ; dimethylsilyl(tetramethylcyclopentadienyl)(n-octadecylamido)titaniumAₙ; dimethylsilylbis(cyclopentadienyl)zirconiumAₙ; dimethylsilylbis(tetramethylcyclopentadienyl)zirconiumAₙ; dimethylsilylbis(methylcyclopentadienyl)zirconiumAₙ; dimethylsilylbis(dimethylcyclopentadienyl)zirconiumAₙ; dimethylsilyl(2,4-dimethylcyclopentadienyl) (3',5'-dimethylcyclopentadienyl)zirconiumAₙ; dimethylsilyl(2,3,5-trimethylcyclopentadienyl)(2',4',5'-dimethylcyclopentadienyl)zirconiumAₙ; dimethylsilylbis(t-butylcyclopentadienyl)zirconiumAₙ; dimethylsilylbis(trimethylsilylcyclopentadienyl)zirconiumAₙ; dimethylsilylbis(2-trimethylsilyl-4-t-butylcyclopentadienyl)zirconiumAₙ; dimethylsilylbis(4,5,6,7-tetrahydro-indenyl)zirconiumAₙ; dimethylsilylbis(indenyl)zirconiumAₙ; dimethylsilylbis(2-methylindenyl)zirconiumAₙ; dimethylsilylbis(2,4-dimethylindenyl)zirconiumAₙ; dimethylsilylbis(2,4,7-trimethylindenyl)zirconiumAₙ; dimethylsilylbis(2-methyl-4-phenylindenyl)zirconiumAₙ; dimethylsilylbis(2-ethyl-4-phenylindenyl)zirconiumAₙ; dimethylsilylbis(benz[e]indenyl)zirconiumAₙ; dimethylsilylbis(2-methylbenz[e]indenyl)zirconiumAₙ; dimethylsilylbis(benz[f]indenyl)zirconiumAₙ; dimethylsilylbis(2-methylbenz[f]indenyl)zirconiumAₙ; dimethylsilylbis(3-methylbenz[f]indenyl)zirconiumAₙ; dimethylsilylbis(cyclopenta[cd]indenyl)zirconiumAₙ; dimethylsilylbis(cyclopentadienyl)zirconiumAₙ; dimethylsilylbis(tetramethylcyclopentadienyl)zirconiumAₙ; dimethylsilylbis(methylcyclopentadienyl)zirconiumAₙ; dimethylsilylbis(dimethylcyclopentadienyl)zirconiumAₙ; isopropylidene(cyclopentadienyl-fluorenyl)zirconiumAₙ; isopropylidene(cyclopentadienyl-indenyl)zirconiumAₙ; isopropylidene(cyclopentadienyl-2,7-di-t-butylfluorenyl)zirconiumAₙ; isopropylidene(cyclopentadienyl-3-methylfluorenyl)zirconiumAₙ; isoropylidene(cyclopentadienyl-4-methylfluorenyl)zirconiumAₙ; isopropylidene(cyclopentadienyl-octahydrofluorenyl)zirconiumAₙ; isopropylidene(methylcyclopentadienyl-fluorenyl)zirconiumAₙ; isopropylidene(dimethylcyclopentadienylfluorenyl)zirconiumAₙ; isopropylidene(tetramethylcyclopentadienyl-fluorenyl)zirconiumAₙ; diphenylmethylene(cyclopentadienyl-fluorenyl)zirconiumAₙ; diphenylmethylene(cyclopentadienyl-indenyl)zirconiumAₙ; diphenylmethylene(cyclopentadienyl-2,7-di-t-butylfluorenyl)zirconiumAₙ; diphenylmethylene(cyclopentadienyl-3-methylfluorenyl)zirconiumAₙ; diphenylmethylene(cyclopentadienyl-4-methylfluorenyl)zirconiumAₙ; diphenylmethylene(cyclopentadienyloctahydrofluorenyl)zirconiumAₙ; diphenylmethylene(methylcyclopentadienyl-fluorenyl)zirconiumAₙ; diphenylmethylene(dimethylcyclopentadienyl-fluorenyl)zirconiumAₙ; diphenylmethylene(tetramethylcyclopentadienyl-fluorenyl)zirconiumAₙ; cyclohexylidene(cyclopentadienyl-fluorenyl)zirconiumAₙ; cyclohexylidene(cyclopentadienylindenyl)zirconiumAₙ; cyclohexylidene(cyclopentadienyl-2,7-di-t-butylfluorenyl)zirconiumAₙ; cyclohexylidene(cyclopentadienyl-3-methylfluorenyl)zirconiumAₙ; cyclohexylidene(cyclopentadienyl-4-methylfluorenyl)zirconiumAₙ; cyclohexylidene(cyclopentadienyloctahydrofluorenyl)zirconiumAₙ; cyclohexylidene(methylcyclopentadienylfluorenyl)zirconiumAₙ; cyclohexylidene(dimethylcyclopentadienyl-fluorenyl)zirconiumAₙ; cyclohexylidene(tetramethylcyclopentadienylfluorenyl)zirconiumAₙ; dimethylsilyl(cyclopentadienyl-fluorenyl)zirconiumAₙ; dimethylsilyl(cyclopentadienyl-indenyl)zirconiumAₙ; dimethylsilyl(cyclopentdienyl-2,7-di-t-butylfluorenyl)zirconiumAₙ; dimethylsilyl(cyclopentadienyl-3-methylfluorenyl)zirconiumAₙ; dimethylsilyl(cyclopentadienyl-4-methylfluorenyl)zirconiumAₙ; dimethylsilyl(cyclopentadienyl-octahydrofluorenyl)zirconiumAₙ; dimethylsilyl(methylcyclopentanedienyl-fluorenyl)zirconiumAₙ; dimethylsilyl(dimethylcyclopentadienylfluorenyl)zirconiumAₙ; dimethylsilyl(tetramethylcyclopentadienylfluorenyl)zirconiumAₙ; isopropylidene(cyclopentadienyl-fluorenyl)zirconiumAₙ; isopropylidene(cyclopentadienyl-indenyl)zirconiumAₙ; isopropylidene(cyclopentadienyl-2,7-di-t-butylfluorenyl)zirconiumAₙ; cyclohexylidene(cyclopentadienylfluorenyl)zirconiumAₙ; cyclohexylidene(cyclopentadienyl-2,7-di-t-butylfluorenyl)zirconiumAₙ; dimethylsilyl(cyclopentadienylfluorenyl)zirconiumAₙ; methylphenylsilyltetramethylcyclopentadienylcyclopropylamidotitaniumAₙ; methylphenylsilyltetramethylcyclopentadienylcyclobutylamidotitaniumAₙ; methylphenylsilyltetramethylcyclopentadienylcyclopentylamidotitaniumAₙ; methylphenylsilyltetramethylcyclopentadienylcyclohexylamidotitaniumAₙ; methylphenylsilyltetramethylcyclopentadienylcycloheptylamidotitaniumAₙ; methylphenylsilyltetramethylcyclopentadienylcyclooctylamidotitaniumAₙ; methylphenylsilyltetramethylcyclopentadienylcyclononylamidotitaniumAₙ; methylphenylsilyltetramethylcyclopentadienylcyclodecylamidotitaniumAₙ; methylphenylsilyltetramethylcyclopentadienylcycloundecylamidotitaniumAₙ; methylphenylsilyltetramethylcyclopentadienylcyclododecylamidotitaniumAₙ; methylphenylsilyl(tetramethylcyclopentadienyl)(sec-butylamido)titaniumAₙ; methylphenylsilyl(tetramethylcyclopentadienyl)(n-octylamido)titaniumAₙ; methylphenylsilyl(tetramethylcyclopentadienyl)(n-decylamido)titaniumAₙ; methylphenylsilyl(tetramethylcyclopentadienyl)(n-octadecylamido)titaniumAₙ; diphenylsilyltetramethylcyclopentadienylcyclopropylamidotitaniumAₙ; diphenylsilyltetramethylcyclopentadienylcyclobutylamidotitaniumAₙ; diphenylsilyltetramethylcyclopentadienylcyclopentylamidotitaniumAₙ; diphenylsilyltetramethylcyclopentadienylcyclohexylamidotitaniumAₙ; diphenylsilyltetramethylcyclopentadienylcycloheptylamidotitaniumAₙ; diphenylsilyltetramethylcyclopentadienylcyclooctylamidotitaniumAₙ; diphenylsilyltetramethylcyclopentadienylcyclononylamidotitaniumAₙ; diphenylsilyltetramethylcyclopentadienylcyclodecylamidotitaniumAₙ; diphenylsilyltetramethylcyclopentadienylcycloundecylamidotitaniumAₙ; diphenylsilyltetramethylcyclopentadienylcyclododecylamidotitaniumAₙ; diphenylsilyl(tetramethylcyclopentadienyl)(sec-butylamido)titaniumAₙ; diphenylsilyl(tetramethylcyclopentadienyl)(n-octylamido)titaniumAₙ; diphenylsilyl(tetramethylcyclopentadienyl)(n-decylamido)titaniumAₙ; and diphenylsilyl(tetramethylcyclopentadienyl)(n-octadecylamido)titaniumAₙ.

In one specific embodiment, the metallocene catalyst includes dimethylsilybis(2-methyl-4-phenyl-1-indenyl)zirconium dichloride.

The metallocene catalysts may be activated with a metallocene activator for subsequent polymerization. As used herein, the term "metallocene activator" is defined to be any compound or combination of compounds, supported or unsupported, which may activate a single-site catalyst compound (*e.g*., metallocenes, Group 15 containing catalysts, etc). This may involve the abstraction of at least one leaving group (A group in the formulas/structures above, for example) from the metal center of the catalyst component. The metallocene catalysts are thus activated towards olefin polymerization using such activators.

Embodiments of such activators include Lewis acids, such as cyclic or oligomeric polyhydrocarbylaluminum oxides, non-coordinating ionic activators "NCA", ionizing activators, stoichiometric activators, combinations thereof or any other compound that may convert a neutral metallocene catalyst component to a metallocene cation that is active with respect to olefin polymerization.

The Lewis acids may include alumoxane (*e.g*., "MAO"), modified alumoxane (*e.g.,* "TIBAO") and alkylaluminum compounds, for example. Non-limiting examples of aluminum alkyl compounds may include trimethylaluminum, triethylaluminum, triisobutylaluminum, tri-n-hexylaluminum and tri-n-octylaluminum, for example.

Ionizing activators are well known in the art and are described by, for example, Eugene You-Xian Chen & Tobin J. Marks, Cocatalysts for Metal-Catalyzed Olefin Polymerization: Activators, Activation Processes, and Structure-Activity Relationships 100(4) CHEMICAL REVIEWS 1391-1434 (2000*).* Examples of neutral ionizing activators include Group 13 tri-substituted compounds, in particular, tri-substituted boron, tellurium, aluminum, gallium and indium compounds and mixtures thereof (*e.g*., trisperfluorophenyl boron metalloid precursors), for example. The substituent groups may be independently selected from alkyls, alkenyls, halogen, substituted alkyls, aryls, arylhalides, alkoxy and halides, for example. In one embodiment, the three groups are independently selected from halogens, mono or multicyclic (including halosubstituted) aryls, alkyls, alkenyl compounds and mixtures thereof, for example. In another embodiment, the three groups are selected from C₁ to C₂₀ alkenyls, C₁ to C₂₀ alkyls, C₁ to C₂₀ alkoxys, C₃ to C₂₀ aryls and combinations thereof, for example. In yet another embodiment, the three groups are selected from the group highly halogenated C₁ to C₄ alkyls, highly halogenated phenyls, and highly halogenated naphthyls and mixtures thereof, for example. By "highly halogenated", it is meant that at least 50% of the hydrogens are replaced by a halogen group selected from fluorine, chlorine and bromine.

Illustrative, not limiting examples of ionic ionizing activators include trialkyl-substituted ammonium salts (*e.g.,* triethylammoniumtetraphenylborate, tripropylammoniumtetraphenylborate, tri(n-butyl)ammoniumtetraphenylborate, trimethylammoniumtetra(p-tolyl)borate, trimethylammoniumtetra(o-tolyl)borate, tributylammoniumtetra(pentafluorophenyl)borate, tripropylammoniumtetra(o,p-dimethylphenyl)borate, tributylammoniumtetra(m,m-dimethylphenyl)borate, tributylammoniumtetra(p-tri-fluoromethylphenyl)borate, tributylammoniumtetra(pentafluorophenyl)borate and tri(n-butyl)ammoniumtetra(o-tolyl)borate), N,N-dialkylanilinium salts (*e.g*., N,N-dimethylaniliniumtetraphenylborate, N,N-diethylaniliniumtetraphenylborate and N,N-2,4,6-pentamethylaniliniumtetraphenylborate), dialkyl ammonium salts *(e.g.,* diisopropylammoniumtetrapentafluorophenylborate and dicyclohexylammoniumtetraphenylborate), triaryl phosphonium salts *(e.g.,* triphenylphosphoniumtetraphenylborate, trimethylphenylphosphoniumtetraphenylborate and tridimethylphenylphosphoniumtetraphenylborate) and their aluminum equivalents, for example.

In yet another embodiment, an alkylaluminum compound may be used in conjunction with a heterocyclic compound. The ring of the heterocyclic compound may include at least one nitrogen, oxygen, and/or sulfur atom, and includes at least one nitrogen atom in one embodiment. The heterocyclic compound includes 4 or more ring members in one embodiment, and 5 or more ring members in another embodiment, for example.

The heterocyclic compound for use as an activator with an alkylaluminum compound may be unsubstituted or substituted with one or a combination of substituent groups. Examples of suitable substituents include halogens, alkyls, alkenyls or alkynyl radicals, cycloalkyl radicals, aryl radicals, aryl substituted alkyl radicals, acyl radicals, aroyl radicals, alkoxy radicals, aryloxy radicals, alkylthio radicals, dialkylamino radicals, alkoxycarbonyl radicals, aryloxycarbonyl radicals, carbomoyl radicals, alkyl- or dialkylcarbamoyl radicals, acyloxy radicals, acylamino radicals, aroylamino radicals, straight, branched or cyclic, alkylene radicals or any combination thereof, for example.

Non-limiting examples of hydrocarbon substituents include methyl, ethyl, propyl, butyl, pentyl, hexyl, cyclopentyl, cyclohexyl, benzyl, phenyl, fluoromethyl, fluoroethyl, difluoroethyl, iodopropyl, bromohexyl or chlorobenzyl, for example.

Non-limiting examples of heterocyclic compounds utilized include substituted and unsubstituted pyrroles, imidazoles, pyrazoles, pyrrolines, pyrrolidines, purines, carbazoles, indoles, phenyl indoles, 2,5,-dimethylpyrroles, 3-pentafluorophenylpyrrole, 4,5,6,7-tetrafluoroindole or 3,4-difluoropyrroles, for example.

Combinations of activators are also contemplated by the invention, for example, alumoxanes and ionizing activators in combinations. Other activators include aluminum/boron complexes, perchlorates, periodates and iodates including their hydrates, lithium (2,2'-bisphenyl-ditrimethylsilicate)-4T- HF and silylium salts in combination with a non-coordinating compatible anion, for example. In addition to the compounds listed above, methods of activation, such as using radiation and electro-chemical oxidation are also contemplated as activating methods for the purposes of enhancing the activity and/or productivity of a single-site catalyst compound, for example. *(See,* U.S. Pat. No. 5,849,852, U.S. Pat. No. 5,859,653, U.S. Pat. No. 5,869,723 and WO 98/32775.)

The catalyst may be activated in any manner known to one skilled in the art. For example, the catalyst and activator may be combined in molar ratios of activator to catalyst of from 1000:1 to 0.1:1, or from 500:1 to 1:1, or from about 100:1 to about 250:1, or from 150:1 to 1:1, or from 50:1 to 1:1, or from 10:1 to 0.5:1 or from 3:1 to 0.3:1, for example.

The activators may or may not be associated with or bound to a support, either in association with the catalyst (*e.g*., metallocene) or separate from the catalyst component, such as described by Gregory G. Hlatky, Heterogeneous Single-Site Catalysts for Olefin Polymerization 100(4) CHEMICAL REVIEWS 1347-1374 (2000*).* Support materials may include talc, inorganic oxides, clays and clay minerals, ion-exchanged layered compounds, diatomaceous earth compounds, zeolites or a resinous support material, such as a polyolefin, for example.

Specific inorganic oxides include silica, alumina, magnesia, titania and zirconia, for example. The inorganic oxides used as support materials may have an average particle size of from 5 microns to 600 microns or from 10 microns to 100 microns, a surface area of from 50 m²/g to 1,000 m²/g or from 100 m²/g to 400 m²/g and a pore volume of from 0.5cc/g to 3.5 cc/g or from 0.5 cc/g to 2.5 cc/g, for example.

Methods for supporting metallocene catalysts are generally known in the art. *(See,* U.S. Patent No. 5,643,847, U.S. Patent No. 09184358 and 09184389, which are incorporated by reference herein.)

In one embodiment, the catalyst is supported and the catalyst system has an activator *(e.g.,* MAO) to support *(e.g.,* silica) weight ratio of from about 0.5:1 to about 2.5:1, or from about 0.5:1 to about 1.5:1 or from about 0.7:1 to about 0.9:1, for example.

In one embodiment, the catalyst is supported and the catalyst system has a metallocene loading (amount of metallocene present on the support material) of from about 0.5 wt.% to about 2.5 wt.% or from about 0.9 wt.% to about 1.25 wt.%.

Optionally, the support material, the catalyst component, the catalyst system or combinations thereof, may be contacted with one or more scavenging compounds prior to or during polymerization. The term "scavenging compounds" is meant to include those compounds effective for removing impurities (*e.g*., polar impurities) from the subsequent polymerization reaction environment. Impurities may be inadvertently introduced with any of the polymerization reaction components, particularly with solvent, monomer and catalyst feed, and adversely affect catalyst activity and stability. Such impurities may result in decreasing, or even elimination, of catalytic activity, for example. The polar impurities or catalyst poisons may include water, oxygen and metal impurities, for example.

The scavenging compound may include an excess of the aluminum containing compounds described above, or may be additional known organometallic compounds, such as Group 13 organometallic compounds. For example, the scavenging compounds may include triethyl aluminum (TMA), triisobutyl aluminum (TiBAl), methylalumoxane (MAO), isobutyl aluminoxane and tri-n-octyl aluminum. In one specific embodiment, the scavenging compound is TiBAl.

In one embodiment, the amount of scavenging compound is minimized during polymerization to that amount effective to enhance activity and avoided altogether if the feeds and polymerization medium may be sufficiently free of impurities.

The support composition and/or the transition metal compound are further contacted with an aluminum containing compound, such as an organic aluminum compound. In one or more embodiments, the aluminum containing compound includes triisobutyl aluminum (TiBAl). In one embodiment, the TiBAl contacts the support composition and/or the transition metal compound in a solution, such as a 30 wt.% in a solvent, such as an isohexane solution. In one embodiment, the TIBAL solution is a 20 wt.% in solvent. However, it is to be noted that the concentration can vary as known to one skilled in the art.

In one embodiment, at least a portion (*e.g.,* a first portion) of the aluminum containing compound contacts the support composition. Another portion *(e.g.,* a second portion) of the aluminum containing compound may contact the transition metal compound. In one or more embodiments, the first portion and the second portion are the same aluminum containing compound. However, it is contemplated that in one or more embodiments, the first portion and the second portion are different aluminum containing compounds, for example.

In one or more embodiments, the first portion and the second portion are equal amounts. For example, about 50 wt.% of the aluminum containing compound may contact the support composition and about 50 wt.% of the aluminum containing compound may contact the transition metal compound prior to contact with one another. In another embodiment, from about 20 wt.% to about 80 wt.%, or from about 30 wt.% to about 70 wt.% or from about 50 wt.% to about 70 wt.% of the aluminum containing compound may contact the support composition and from about 80 wt.% to about 20 wt. %, or from about 30 wt.% to about 60 wt.% or from about 35 wt.% to about 55 wt.% of the aluminum containing compound may contact the transition metal compound prior to contact with one another, for example. In one embodiment, the weight ratio of the aluminum containing compound to the support composition may be from about 10:1 to about 0.01:1, for example.

Alternatively, the transition metal compound and the support composition may be contacted in the presence of the aluminum containing compound.

In another embodiment, only the transition metal compound is contacted with the aluminum containing compound.

The contact may occur by contacting the support composition with the aluminum containing compound at a reaction temperature of from about 0°C to about 150°C or from about 20°C to about 100°C for a time of from about 10 minutes to about 5 hours or from about 30 minutes to about 120 minutes, for example. In one embodiment, the contact occurs for a time of at least 2 hours, such as 4 hours, for example.

Such contact may occur in the presence of an inert solvent. Although the process is discussed below in terms of charging the transition metal compound in an inert solvent, the support composition (either in combination with the transition metal compound or alternatively without the transition metal compound) may be mixed with the inert solvent to form a support slurry prior to contact with the transition metal compound. Methods for supporting transition metal catalysts are generally known in the art. (*See,* U.S. Patent No. 5,643,847, which is incorporated by reference herein.)

Suitable solvents include substituted and unsubstituted aliphatic hydrocarbons and substituted and unsubstituted aromatic hydrocarbons. For example, the inert solvent may include hexane, heptane, octane, decane, toluene, xylene, dichloromethane, chloroform, 1-chlorobutane or combinations thereof. In one specific embodiment, the inert solvent includes isohexane. In another embodiment, the inert solvent includes mineral oil including an amount of toluene.

### Polymerization Processes

As indicated elsewhere herein, catalyst systems are used to form polyolefin compositions. Once the catalyst system is prepared, as described above and/or as known to one skilled in the art, a variety of processes may be carried out using that composition. The equipment, process conditions, reactants, additives and other materials used in polymerization processes will vary in a given process, depending on the desired composition and properties of the polymer being formed. Such processes may include solution phase, gas phase, slurry phase, bulk phase, high pressure processes or combinations thereof, for example. (*See,* U.S. Patent No. 5,525,678; U.S. Patent No. 6,420,580; U.S. Patent No. 6,380,328; U.S. Patent No. 6,359,072; U.S. Patent No. 6,346,586; U.S. Patent No. 6,340,730; U.S. Patent No. 6,339,134; U.S. Patent No. 6,300,436; U.S. Patent No. 6,274,684; U.S. Patent No. 6,271,323; U.S. Patent No. 6,248,845; U.S. Patent No. 6,245,868; U.S. Patent No. 6,245,705; U.S. Patent No. 6,242,545; U.S. Patent No. 6,211,105; U.S. Patent No. 6,207,606; U.S. Patent No. 6,180,735 and U.S. Patent No. 6,147,173, which are incorporated by reference herein.)

In certain embodiments, the processes described above generally include polymerizing one or more olefin monomers to form polymers. The olefin monomers may include C₂ to C₃₀ olefin monomers, or C₂ to C₁₂ olefin monomers (*e.g*., ethylene, propylene, butene, pentene, methylpentene, hexene, octene and decene), for example. The monomers may include olefinic unsaturated monomers, C₄ to C₁₈ diolefins, conjugated or nonconjugated dienes, polyenes, vinyl monomers and cyclic olefins, for example. Non-limiting examples of other monomers may include norbornene, nobornadiene, isobutylene, isoprene, vinylbenzocyclobutane, sytrene, alkyl substituted styrene, ethylidene norbornene, dicyclopentadiene and cyclopentene, for example. The formed polymer may include homopolymers, copolymers or terpolymers, for example.

Examples of solution processes are described in U.S. Patent No. 4,271,060, U.S. Patent No. 5,001,205, U.S. Patent No. 5,236,998 and U.S. Patent No. 5,589,555, which are incorporated by reference herein.

One example of a gas phase polymerization process includes a continuous cycle system, wherein a cycling gas stream (otherwise known as a recycle stream or fluidizing medium) is heated in a reactor by heat of polymerization. The heat is removed from the cycling gas stream in another part of the cycle by a cooling system external to the reactor. The cycling gas stream containing one or more monomers may be continuously cycled through a fluidized bed in the presence of a catalyst under reactive conditions. The cycling gas stream is generally withdrawn from the fluidized bed and recycled back into the reactor. Simultaneously, polymer product may be withdrawn from the reactor and fresh monomer may be added to replace the polymerized monomer. The reactor pressure in a gas phase process may vary from about 100 psig to about 500 psig, or from about 200 psig to about 400 psig or from about 250 psig to about 350 psig, for example. The reactor temperature in a gas phase process may vary from about 30°C to about 120°C, or from about 60°C to about 115°C, or from about 70°C to about 110°C or from about 70°C to about 95°C, for example. (*See,* for example, U.S. Patent No. 4,543,399; U.S. Patent No. 4,588,790; U.S. Patent No. 5,028,670; U.S. Patent No. 5,317,036; U.S. Patent No. 5,352,749; U.S. Patent No. 5,405,922; U.S. Patent No. 5,436,304; U.S. Patent No. 5,456,471; U.S. Patent No. 5,462,999; U.S. Patent No. 5,616,661; U.S. Patent No. 5,627,242; U.S. Patent No. 5,665,818; U.S. Patent No. 5,677,375 and U.S. Patent No. 5,668,228, which are incorporated by reference herein.)

Slurry phase processes generally include forming a suspension of solid, particulate polymer in a liquid polymerization medium, to which monomers and optionally hydrogen, along with catalyst, are added. The suspension (which may include diluents) may be intermittently or continuously removed from the reactor where the volatile components can be separated from the polymer and recycled, optionally after a distillation, to the reactor. The liquefied diluent employed in the polymerization medium may include a C₃ to C₇ alkane (*e.g*., hexane or isobutane), for example. The medium employed is generally liquid under the conditions of polymerization and relatively inert. A bulk phase process is similar to that of a slurry process with the exception that the liquid medium is also the reactant (*e.g*., monomer) in a bulk phase process. However, a process may be a bulk process, a slurry process or a bulk slurry process, for example.

In a specific embodiment, a slurry process or a bulk process may be carried out continuously in one or more loop reactors. The catalyst, as slurry or as a dry free flowing powder, may be injected regularly to the reactor loop, which can itself be filled with circulating slurry of growing polymer particles in a diluent, for example. Optionally, hydrogen may be added to the process, such as for molecular weight control of the resultant polymer. The loop reactor may be maintained at a pressure of from about 27 bar to about 50 bar or from about 35 bar to about 45 bar and a temperature of from about 38°C to about 121°C, for example. Reaction heat may be removed through the loop wall via any method known to one skilled in the art, such as via a double-jacketed pipe or heat exchanger, for example.

Alternatively, other types of polymerization processes may be used, such as stirred reactors in series, parallel or combinations thereof, for example. Upon removal from the reactor, the polymer may be passed to a polymer recovery system for further processing, such as addition of additives and/or extrusion, for example.

Optionally, the polymerization process may include the addition of hydrogen to the process for control of the polymer molecular weight, for example. Such addition is known to one skilled in the art and depends upon specific reaction conditions. However, hydrogen concentrations may be from about 0.001 mol% to about 1.1 mol% or from about 0.5 mol % to about 0.8 mol % based on monomer, for example.

### Polymer Product

The polymers (and blends thereof) formed via the processes described herein may include, but are not limited to, linear low density polyethylene, elastomers, plastomers, high density polyethylenes, low density polyethylenes, medium density polyethylenes, polypropylene and polypropylene copolymers, for example.

### Product Application

The polymers and blends thereof are useful in applications known to one skilled in the art, such as forming operations (*e.g*., film, sheet, pipe and fiber extrusion and co-extrusion as well as blow molding, injection molding and rotary molding). Films include blown or cast films formed by co-extrusion or by lamination useful as shrink film, cling film, stretch film, sealing films, oriented films, snack packaging, heavy duty bags, grocery sacks, baked and frozen food packaging, medical packaging, industrial liners, and membranes, for example, in food-contact and non-food contact application. Fibers include melt spinning, solution spinning and melt blown fiber operations for use in woven or non-woven form to make filters, diaper fabrics, medical garments and geotextiles, for example. Extruded articles include medical tubing, wire and cable coatings, geomembranes and pond liners, for example. Molded articles include single and multi-layered constructions in the form of bottles, tanks, large hollow articles, rigid food containers and toys, for example.

### Examples

The metallocene used herein is dimethylsilylbis(2-methyl-4-phenyl-1-indenyl)zirconium dichloride.

As used below "P10" refers to silica that is commercially available from Fuji Silysia Chemical LTD.

*Support Preparation:* The support was prepared by drying P10 silica at 150°C under nitrogen for about 12 hours. The dried silica was stored at room temperature under nitrogen and then 20 g of the silica was introduced to a 500 mL round-bottom flask equipped with a stir bar. The preparation then included adding 250 mL of dry toluene to the flask and stirring the resulting suspension at room temperature for about 3 minutes. The preparation then included dropwise addition of MAO in toluene (30 wt.%) to the flask at room temperature to result in an MAO/SiO₂ weight ratio of 0.7:1.0. The resulting mixture was then stirred for 30 minutes at room temperature and then heated to 115°C for 4 hours. The slurry was then filtered through a glass frit. The resulting solid was washed with 20 g of dry toluene and three times with 20 g of iso-hexane. The resulting support was then dried under vacuum at room temperature for another 3 hours.

*Example 1 (comparative):* The catalyst was prepared by introducing 2 g. of the support into a 100 mL flask and adding 50 g of dry toluene to the flask under nitrogen and stirring the resulting suspension at room temperature. The metallocene (20 mg in 10 g. of toluene) was then added to the suspension and stirred for 2 hours at ambient temperature under nitrogen. The resulting slurry was then filtered through a glass frit filter and washed 3 times with 15 g. of dry toluene and 2 times with 15 g. of dry hexane. The resulting dark red solid was then dried under vacuum at room temperature for one hour and then slurried in mineral oil.

The resulting catalysts were then contacted with propylene monomer to form polyproypylene. (1.3 kg of propylene, 0.075 mol% H₂, 30 mg catalyst, 0.53 mmol TEA1 in 4 L reactor at 67°C for 1 hour with in-situ prepolymerization.)

*Example 2:* The catalyst was prepared by slurrying 2 g. of the support in hexane (20 mL) and TiBAl (3.3 g of 30 wt% in hexane) was added to the resulting slurry. The slurry was stirred for about 3 minutes. A slurry of metallocene (40 mg in 10 mL of hexane) was treated with TiBAl (3.3 g of 30 wt.% in hexanes) and allowed to stir for approximately 3 minutes. The slurry of metallocene and TiBAl was then added to the slurry of support and allowed to stir for 4 hours. The resulting mixture was then filtered and washed three times with isohexane.

The resulting brownish yellow solid is then dried under vacuum at room temperature for one hour and then slurried in mineral oil.

*Example 3:* The MAO/SiO₂ support (2 g) was slurried in hexanes (20 mL). A slurry of metallocene (40 mg in 10 mL of hexane) was treated with TiBAl (6.6 g of 30 wt.% in hexane) and allowed to stir for approximately 4 hours. The metallocene and TiBAl slurry was then added to the support slurry and allowed to stir for 2 hours. The resulting mixture was then filtered and washed three times with hexane. The resulting brownish yellow solid is then dried under vacuum at room temperature for one hour and then slurried in mineral oil.

This same methodology was utilized in preparing additional catalysts with variation in the amount of metallocene and TiBAl utilized, as shown in the Table 1.

*Example 4:* The MAO/SiO₂ support (2 g) was then slurried in hexanes (20 mL) and TiBAl (5.0 g of 20 wt% in hexanes) was added and the slurry allowed to stir for approximately 3 minutes. A slurry of metallocene (40 mg in 10 mL of hexane) was treated with TiBAl (5.0 g of 20 wt.% in hexanes) and allowed to stir for approximately one hour. The slurry of metallocene and TiBAl was then added to the slurry of support and allowed to stir for two hours. The resulting mixture was then filtered and washed three times with hexanes. The resulting brownish yellow solid is then dried under vacuum at room temperature for one hour and then slurried in mineral oil.

*Example 5:* The MAO/SiO₂ support (2 g) was then slurried in hexane (20 mL). A slurry of metallocene (25 mg in 10 mL of hexanes) was treated with TiBAl (3.1 g of 20 wt.% in hexane) and allowed to stir for approximately 3 minutes. The slurry of metallocene and TiBAl was then added to the slurry of support and allowed to stir for 1 hour. The resulting mixture was then filtered and washed three times with hexanes. The resulting brownish yellow solid is then dried under vacuum at room temperature for one hour.

*Example 6:* The support was prepared by drying P10 silica at 150°C under nitrogen for about 12 hours. The dried silica was stored at room temperature under nitrogen and then 20 g of the silica was introduced to a 500 mL round-bottom flask equipped with a stir bar. The preparation then included adding 250 mL of dry toluene to the flask and stirring the resulting suspension at room temperature for about 3 minutes. The preparation then included dropwise addition of MAO in toluene (30 wt.%) to the flask at room temperature to result in an neat MAO to silica weight ratio of 0.9:1.0. The resulting mixture was then stirred for 30 minutes at room temperature and then heated to 115°C for 4 hours. The slurry was then filtered through a glass frit. The resulting solid was washed with 20 g of dry toluene and three times with 20 g of iso-hexane. The resulting support was then dried under vacuum at room temperature for another 3 hours. The MAO/SiO₂ support (2 g) was then slurried in hexane (20 mL). A slurry of metallocene (24 mg in 10 mL of hexane) was treated with TiBAl (2.0 g of 30 wt.% in hexane) and allowed to stir for approximately 1 hour. The metallocene and TiBAl slurry was then added to the support slurry and allowed to stir for 1 hour. The resulting mixture was then filtered and washed three times with hexane. The resulting brownish yellow solid is then dried under vacuum at room temperature for one hour and slurried in mineral oil.

*Example 7 (comparative):* The support was prepared by drying P10 silica at 150°C under nitrogen for about 12 hours. The dried silica was stored at room temperature under nitrogen and then 20 g of the silica was introduced to a 500 mL round-bottom flask equipped with a stir bar. The preparation then included adding 250 mL of dry toluene to the flask and stirring the resulting suspension at room temperature for about 3 minutes. The preparation then included dropwise addition of MAO in toluene (30 wt.%) to the flask at room temperature to result in an neat MAO to silica weight ratio of 0.5:1.0. The resulting mixture was then stirred for 30 minutes at room temperature and then heated to 115°C for 4 hours. The slurry was then filtered through a glass frit. The resulting solid was washed with 20 g of dry toluene and three times with 20 g of iso-hexane. The resulting support was then dried under vacuum at room temperature for another 3 hours. The MAO/SiO₂ support (2 g) was then slurried in hexane (20 mL). A slurry of metallocene (24 mg in 10 mL of hexane) was treated with TiBAl (2.0 g of 30 wt.% in hexane) and allowed to stir for approximately 1 hour. The metallocene and TiBAl slurry was then added to the support slurry and allowed to stir for 1 hour. The resulting mixture was then filtered and washed three times with hexane. The resulting brownish yellow solid is then dried under vacuum at room temperature for one hour and slurried in mineral oil.

*Example 8:* The MAO/SiO₂ support (2 g) was then slurried in hexanes (20 mL) and allowed to stir for approximately 3 minutes. A slurry of metallocene (26 mg in 10 mL of hexane) was treated with TiBAl (2.1 g of 30 wt.% in hexanes) and allowed to stir for approximately one hour. The slurry of support was then added to the slurry of metallocene and TiBAl and allowed to stir for one hour. The resulting mixture was then filtered and washed three times with hexanes. The resulting brownish yellow solid is then dried under vacuum at room temperature for one hour and then slurried in mineral oil.

*Example 9:* The MAO/SiO₂ support (2 g) was then slurried in hexanes (20 mL) and allowed to stir for approximately 3 minutes. A slurry of metallocene (26 mg in 10 mL of hexane) was treated with TiBAl (2.1 g of 30 wt.% in hexanes) and allowed to stir for approximately one hour. The slurry of metallocene and TiBAl was then added to the support and allowed to stir for one hour. The resulting mixture was then filtered and washed three times with hexanes. The resulting brownish yellow solid is then dried under vacuum at room temperature for one hour and then slurried in mineral oil.

The resulting catalysts were then contacted with propylene monomer to form polyproypylene. (720 g of propylene, 24 mmol H₂, 30 mg catalyst, 60 mg TEA1 in 4 L reactor at 67°C for 30 minutes with in-situ prepolymerization.) The laboratory reactor is charged with propylene and hydrogen with the temperature at approximately 90°F. The catalyst is then added, again with propylene, and the reaction temperature increased to 153°F over approximately five minutes. It is this period of heating that is normally referred to as *in situ* prepolymerization.

The results of the polymerizations are summarized in Table 1 below.

**TABLE 1**

| Run # | Example # | Metallocene loading (wt.%) | TiBAl:metallocene (molar ratio) | MAO:SiO₂ (molar ratio) | TiBAl contact time (hrs) | Activity (g/g/h) | BD (g/cc) |
|---|---|---|---|---|---|---|---|
| 1 | 1 (comp.) | 1 | No TiBAl | 0.7:1 | 2 | 11,100 | 0.46 |
| 2 | 2 | 2 | 79.2 | 0.7:1 | 0.02 | 19,500 | 0.47 |
| 3 | 3 | 2 | 158.7:1 | 0.7:1 | 4 | 24,500 | 0.48 |
| 4 | 3 | 1 | 80:1 | 0.7:1 | 1 | 16,603 | 0.47 |
| 5 | 3 | 1.50 | 80:1 | 0.7:1 | 1 | 18,684 | 0.47 |
| 6 | 3 | 1.75 | 80:1 | 0.7:1 | 1 | 19,229 | 0.47 |
| 7 | 3 | 2.0 | 79:1 | 0.7:1 | 2 | 20,357 | 0.47 |
| 8 | 3 | 2.0 | 40:1 | 0.7:1 | 1 | 16,454 | 0.47 |
| 9 | 3 | 2.50 | 80:1 | 0.7:1 | 1 | 19,600 | 0.47 |
| 10 | 4 | 1.2 | 80:1 | 0.7:1 | 1 | 25,800 | 0.50 |
| 11 | 5 | 1.2 | 39.3:1 | 0.7:1 | 4 | 23,500 | 0.50 |
| 12 | 8 | 1.2 | 80:1 | 0.7:1 | 1 | 19,800 | 0.46 |
| 13 | 7 (comp.) | 1.2 | 80:1 | 0.5:1 | 1 | 11,000 | 0.45 |
| 14 | 6 | 1.2 | 80:1 | 0.9:1 | 1 | 28,000 | 0.48 |
| 15 | 9 | 1.2 | 80:1 | 0.7:1 | 1 | 19,000 | 0.46 |

The above results show that greatest activity is achieved when the metallocene is contacted with TiBAl rather than contact with both the metallocene and the support.

In addition, it was observed that the use of 20 wt.% TiBAl can produce catalysts with the similar activity and fluff character as that found with 30 wt.% TiBAl.

## Claims

1. A method of forming a catalyst system comprising:
providing a support material and contacting the support material with an activator to form an activated support, and wherein the activated support comprises an activator to support material weight ratio of from 0.7:1 to 0.9:1;
providing a transition metal catalyst compound;
contacting the transition metal catalyst compound with triisobutyl aluminium (TiBAl) to form a modified catalyst compound, wherein the contact with TiBAl consists essentially of contacting the transition metal catalyst compound with TiBAl prior to contacting the support material with the modified catalyst compound; and
contacting the support material with the modified catalyst compound to form a supported catalyst system.

2. The method of claim 1, wherein the support material comprises silica.

3. The method of claim 1 wherein the activator comprises methyl alumoxane.

4. The method of claim 1, wherein the transition metal catalyst compound comprises a metallocene catalyst.

5. The method of claim 1, wherein the transition metal catalyst compound comprises dimethylsilylbis(2-methyl-4-phenyl-1-indenyl)zirconium dichloride.

6. The method of claim 1, wherein the transition metal catalyst compound contacts the triisobutyl aluminium (TiBAl) for a time of about 4 hours to form the modified catalyst compound.

7. The method of claim 1, wherein the supported catalyst system comprises from about 0.05 wt% to about 2wt% transition metal catalyst compound.

8. The method of claim 1, wherein the TiBAl is contacted with the transition metal catalyst component in the presence of an inert solvent.

9. The method of claim 8, wherein the inert solvent comprises isohexane; or the method of claim 10, wherein the TiBAl comprises a 20wt% solution.

10. The method of claim 1further comprises contacting the supported catalyst system with an olefin monomer to form a polyolefin.

11. The method of claim 10, wherein the polyolefin comprises isotactic polypropylene.

12. The method of claim 10, wherein supported catalyst system results in a productivity that is greater than that of a supported catalyst system absent the aluminium containing compound, the latter being TiBAl.

13. A supported catalyst system formed by the method of claim 1.

## Patentansprüche

1. Verfahren zum Bilden eines Katalysatorsystems, das umfasst:
Bereitstellen eines Trägermaterials und Inkontaktbringen des Trägermaterials mit einem Aktivator, um einen aktivierten Träger zu bilden, und wobei der aktivierte Träger einen Aktivator umfasst, um ein Materialgewichtsverhältnis von 0,7:1 bis 0,9 zu 1 zu unterstützen;
Bereitstellen einer Übergangsmetallkatalysatorverbindung;
Inkontaktbringen der Übergangsmetallkatalysatorverbindung mit Triisobutylaluminium (TiBAl), um eine modifizierte Katalysatorverbindung zu bilden, wobei das Inkontaktbringen mit TiBAl im Wesentlichen aus dem Inkontaktbringen der Übergangsmetallkatalysatorverbindung mit TiBAl vor dem Inkontaktbringen des Trägermaterials mit der modifizierten Katalysatorverbindung umfasst; und
Inkontaktbringen des Trägermaterials mit der modifizierten Katalysatorverbindung, um ein getragenes Katalysatorsystem zu bilden.

2. Verfahren nach Anspruch 1, wobei das Trägermaterial Silika umfasst.

3. Verfahren nach Anspruch 1, wobei der Aktivator Methylalumoxan umfasst.

4. Verfahren nach Anspruch 1, wobei die Übergangsmetallkatalysatorverbindung einen Metallocenkatalysator umfasst.

5. Verfahren nach Anspruch 1, wobei die Übergangsmetallkatalysatorverbindung Dimethylsilylbis(2-methyl-4-phenyl-1-indenyl)zirkoniumdichlorid umfasst.

6. Verfahren nach Anspruch 1, wobei die Übergangsmetallkatalysatorverbindung für einen Zeitraum von ungefähr 4 Stunden mit dem Triisobutylaluminium (TiBAl) in Kontakt gelangt, um die modifizierte Katalysatorverbindung zu bilden.

7. Verfahren nach Anspruch 1, wobei das getragene Katalysatorsystem ungefähr 0,05 Gew.-% bis ungefähr 2 Gew.-% Übergangsmetallkatalysatorverbindung umfasst.

8. Verfahren nach Anspruch 1, wobei das TiBAl in der Gegenwart eines inerten Lösungsmittels mit der Übergangsmetallkatalysatorkomponente in Kontakt gebracht wird.

9. Verfahren nach Anspruch 8, wobei das inerte Lösungsmittel Isohexan umfasst; oder Verfahren nach Anspruch 10, wobei das TiBAl eine Lösung von 20 Gew.-% umfasst.

10. Verfahren nach Anspruch 1, das ferner das Inkontaktbringen des getragenen Katalysatorsystems mit einem Olefinmonomer umfasst, um ein Polyolefin zu bilden.

11. Verfahren nach Anspruch 10, wobei das Polyolefin isotaktisches Polypropylen umfasst.

12. Verfahren nach Anspruch 10, wobei das getragene Katalysatorsystem zu einer Produktivität führt, die höher als jene eines getragenen Katalysatorsystems ohne die aluminiumhaltige Verbindung ist, wobei Letztere TiBAl ist.

13. Getragenes Katalysatorsystem, das mit dem Verfahren nach Anspruch 1 gebildet ist.

## Revendications

1. Procédé pour former un système catalyseur, comprenant les opérations consistant à :
disposer d'un matériau de support et mettre le matériau de support en contact avec un activateur pour former un support activé, le support activé comprenant un rapport en poids de l'activateur au matériau de support de 0,7/1 à 0,9/1 ;
disposer d'un composé de catalyseur à base de métal de transition ;
mettre le composé de catalyseur à base de métal de transition en contact avec du triisobutyl-aluminium (TiBAl) pour former un composé de catalyseur modifié, la mise en contact avec le TiBAl consistant essentiellement en une mise en contact du composé de catalyseur à base de métal de transition avec le TiBAl avant mise en contact du matériau de support avec le composé de catalyseur modifié ; et
mettre le matériau de support en contact avec le composé de catalyseur modifié pour former un système catalyseur supporté.

2. Procédé selon la revendication 1, dans lequel le matériau de support comprend de la silice.

3. Procédé selon la revendication 1, dans lequel l'activateur comprend du méthylalumoxane.

4. Procédé selon la revendication 1, dans lequel le composé de catalyseur à base de métal de transition comprend un catalyseur à base de métallocène.

5. Procédé selon la revendication 1, dans lequel le composé de catalyseur à base de métal de transition comprend du dichlorure de diméthylsilylbis(2-méthyl-4-phényl-1-indényl)zirconium.

6. Procédé selon la revendication 1, dans lequel le composé de catalyseur à base de métal de transition vient au contact du triisobutyl-aluminium (TiBAl) pendant un temps d'environ 4 heures pour former le composé de catalyseur modifié.

7. Procédé selon la revendication 1, dans lequel le système catalyseur supporté comprend d'environ 0,05 % en poids à environ 2 % en poids de composé de catalyseur à base de métal de transition.

8. Procédé selon la revendication 1, dans lequel le TiBAl est mis en contact avec le composant de catalyseur à base de métal de transition en présence d'un solvant inerte.

9. Procédé selon la revendication 8, dans lequel le solvant inerte comprend de l'isohexane ; ou procédé selon la revendication 10, dans lequel le TiBAl comprend une solution à 20 % en poids.

10. Procédé selon la revendication 1, comprenant en outre la mise en contact du système catalyseur supporté avec un monomère d'oléfine pour former une polyoléfine.

11. Procédé selon la revendication 10, dans lequel la polyoléfine comprend du polypropylène isotactique.

12. Procédé selon la revendication 10, dans lequel le système catalyseur supporté a pour résultat une productivité qui est supérieure à celle d'un système catalyseur supporté sans le composé contenant de l'aluminium, ce dernier étant le TiBAl.

13. Système catalyseur supporté formé par le procédé de la revendication 1.
